Europäisches Patentamt

European Patent Office

Office européen des brevets

(11) Veröffentlichungsnummer: **0 319 940**
**A1**

## EUROPÄISCHE PATENTANMELDUNG

(21) Anmeldenummer: **88120413.5**

(22) Anmeldetag: **07.12.88**

(51) Int. Cl.⁴: **B60C 9/00**

(30) Priorität: **09.12.87 DE 8716246 U**
**04.07.88 DE 8808544 U**

(43) Veröffentlichungstag der Anmeldung:
**14.06.89 Patentblatt 89/24**

(84) Benannte Vertragsstaaten:
**AT BE CH DE FR GB IT LI LU NL SE**

(71) Anmelder: **HOECHST AKTIENGESELLSCHAFT**
**Postfach 80 03 20**
**D-6230 Frankfurt am Main 80(DE)**

(72) Erfinder: **Rötgers, André**
**Schlesierstrasse 44**
**D-8903 Bobingen(DE)**

(54) **Fahrzeugreifen.**

(57) Fahrzeugreifen enthaltend ein Verstärkungsgarn, dadurch gekennzeichnet, daß dieses zu mindestens 85 Gew.-% aus Polyethylenterephthalat besteht, seine Reißfestigkeit (Höchstzugkraft) nicht unter 40 cN/tex liegt, bei einer Reißdehnung von nicht über 15 %, sein Heißluftschrumpf bei 160 °C 2 % nicht überschreitet, daß es 30 bis 100 Kapillarschlingen pro m aufweist und daß es ungedreht oder mit einem geringen Schutzdrall von bis zu 100 Drehungen pro m versehen ist.

Fig. 1

EP 0 319 940 A1

# Fahrzeugreifen

Die vorliegende Erfindung betrifft einen Fahrzeugreifen für Fahrzeuge mit geringer Belastung wie z.B. Fahrräder, Mopeds, Leichtmotorräder, Leichtanhänger und dergleichen, der ein Polyesterverstärkungsgarn enthält.

Aus der US-Patentschrift 3,314,847 sind Verstärkungsgarne bekannt, die durch eine Blasdüse texturiert wurden und anschließend ohne eine dipvorbehandlung mit einem Elastomer beschichtet und in einen Gummi eingebettet werden. Die Beispiele dieser Patentschrift beziehen sich alle auf Polyamidgarne und als Anwendungsgebiet wird u.a. auch die Herstellung von Reifencord genannt. Bisher kam es jedoch zu keiner kommerziellen Verwendung derartiger Garne im Reifenbau und auch die nachfolgende Patentliteratur nennt als Einsatzgebiete für diese Garne nur die Herstellung von Täschnerware, Transportbändern oder Antriebsriemen (z.B. DE-OS 27 24 230 oder Deutsches Gebrauchsmuster 77 39 284).

Überraschenderweise wurde nun gefunden, daß sich hochfeste Polyestergarne, die aufgrund einer Texturierung, vorzugsweise einer Blastexturierung, an der Fadenoberfläche Filamentschlingen aufweisen, als Verstärkungsgarne für niedrig belastete Fahrzeugreifen eignen, wenn sie zu mindestens 85 Gew.-% aus Polyethylenterephthalat bestehen, ihre Reißfestigkeit (Höchstzugkraft) nicht unter 40 cN/tex liegt, bei einer Reißdehnung von nicht über 15 %, der Heißluftschrumpf bei 160° C 2 % nicht überschreitet und die Zahl der Schlingen (gemessen nach dem Lichtschrankenverfahren) zwischen 50 und 70 pro m Garn liegt.

Die Garne können völlig ungedreht sein oder einen geringen Schutzdrall von bis zu ca. 100 Drehungen pro m aufweisen.

Im Rahmen dieses Bereichs wird der aufzubringende Schutzdrall den Bedürfnissen der Weiterverarbeiter angepaßt. Wird ein Garn mit hohem Zusammenhalt und besonderer dynamischer Tüchtigkeit gefordert, so ist es zweckmäßig, einen Schutzdrall von 30 - 100, vorzugsweise 50 - 70 Drehungen pro m aufzubringen. Ist dies nicht der Fall und kommt es mehr auf technisch einfache und damit besonders preisgünstige Herstellung an, so wird zweckmäßigerweise ein Garn mit einem Schutzdrall bis zu 30 Drehungen pro m, vorzugsweise ein Garn ohne Schutzdrall eingesetzt.

Ferner sind für den erfindungsgemäßen Einsatz solche Garne bevorzugt, deren Höchstzugkraft 45 bis 50 cN/tex beträgt und deren Heißluftschrumpf bei 200° C unter 2 % liegt.

Die vorliegende Erfindung betrifft daher einen Fahrzeugreifen für Fahrzeuge mit geringer Belastung, der als Verstärkungsgarn ein Polyestergarn mit den obengenannten Spezifikationen enthält.

Die erfindungsgemäß einzusetzenden Garne sind an sich bekannt und wurden bislang vorzugsweise als Teppichgarne eingesetzt. Sie werden nach an sich bekannten Verfahren hergestellt, wie sie z.B. in der DE-OS 27 24 230 offenbart sind. Die Verfahrensbedingungen dieser Verfahren können dabei so eingestellt werden, daß sich die oben angegebenen Merkmale der erfindungsgemäß in die Fahrzeugreifen einzuarbeitenden Verstärkungsgarne ergeben.

Als Ausgangsgarne für die erfindungsgemäße einzusetzenden Verstärkungsgarne werden zweckmäßigerweise handelsübliche Polyestergarne, vorzugsweise hochfeste Typen wie z.B. ®TREVIRA HOCHFEST eingesetzt.

Zur Herstellung des erfindungsgemäßen Fahrzeugreifens wird in an sich bekannter Weise ein Band aus einer Vielzahl von Fäden des erfindungsgemäß einzusetzenden Verstärkungsgarns erzeugt, das Band beidseitig mit Kautschukmasse belegt und das kautschukbelegte Band in der Reifenaufbaumaschine zum Reifenrohling geformt. Dieser wird anschließend wie üblich vulkanisiert.

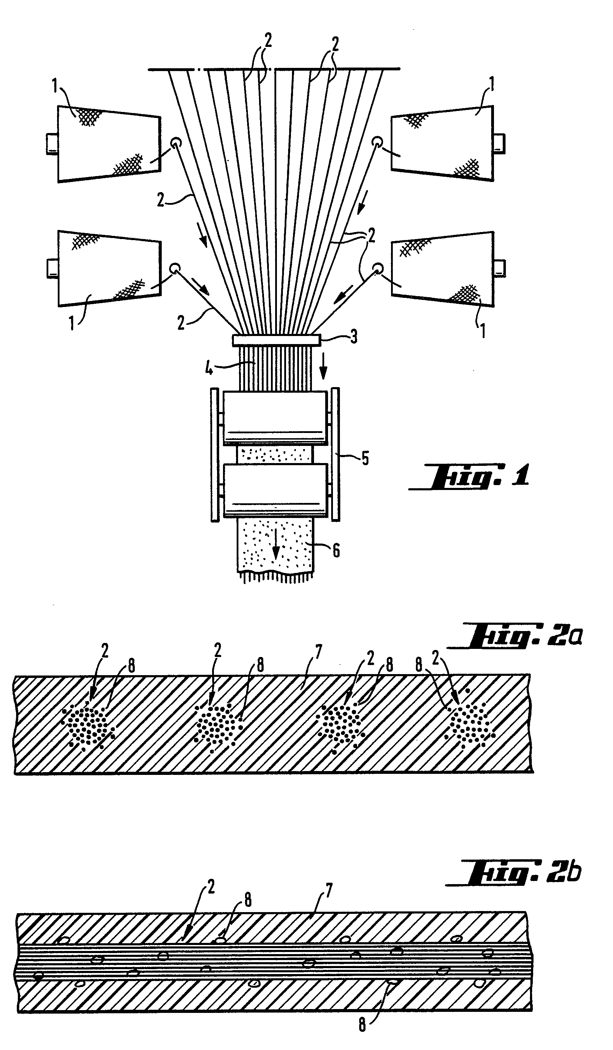

Die Figur 1 veranschaulicht den 1. Schritt dieses an sich bekannten Herstellungsprozesses. Sie zeigt eine Vielzahl von Garnspulen (1), deren Fäden (2) durch ein Leitelement (3) zu einem Band (4) zusammengefaßt werden, welches in einen Kalander (5) einläuft und in diesem mit einer Kautschukmasse belegt wird. Das mit Kautschuk belegte Band (6) verläßt den Kalander und wird den weiteren Produktionsprozessen zugeführt.

Die Figuren 2a und 2b zeigen einen Abschnitt aus einem Quer-und einem Längsschnitt durch den erfindungsgemäßen Fahrzeugreifen. Man erkennt in Figur 2a die in die Kautschukmasse (7) eingebetteten, aus Einzelfilamenten zusammengesetzten Fäden (2) und in der Figur 2b sieht man einen Faden (2), der durch eine Vielzahl seiner Kapillarschlingen (8) in der Kautschukmasse (7) mechanisch verankert ist.

Entscheidend für die Qualität des erfindungsgemäßen Fahrzeugreifens ist die spezielle Kombination von Festigkeit, Dehnung, Schrumpf und Schlingenzahl des darin eingearbeiteten Verstärkungsgarns. Alle diese Parameter müssen eingehalten werden um zu guten Fahrzeugreifen zu gelangen. Zu beachten ist auch, daß eine gegebenenfalls bei der Garnherstellung aufgebrachte Präparation mit der späteren Gummierung verträglich ist.

Der Garntiter und der Einzelfilamenttiter wird der jeweiligen Problemstellung angepaßt. In der Regel sind Garntiter zwischen 500 und 1500 dtex für die Verstärkung von Fahrzeugreifen für Fahrzeuge mit niedriger Belastung gut geeignet. Die Einzeltiter liegen zwischen 3 und 15 dtex.

Die folgenden Ausführungsbeispiele veranschaulicht die Herstellung eines neuerungsgemäßen Fahrzeugreifens.

## Beispiel 1

Zur Herstellung des Fahrzeugreifens wurde ein Polyestergarn der Type ®TREVIRA HOCHFEST Type 702 dtex 1200 f 200 Z 60 eingesetzt. Dieses Garn besteht zu 100 Gew.-% aus Polyethylenterephthalat, seine Reißfestigkeit ist 46 cN/tex bei einer Reißdehnung von 13,8 %. Sein Heißluftschrumpf bei 160 ° C beträgt 0,8 %. Es weist im Mittel 60 Schlingen pro m auf. Vor seiner Texturierung wird das Garn mit einer kautschukverträglichen Präparation versehen.

Von 150 auf ein Gatter aufgesetzten Spulen dieses Garns wurden die Fäden abgezogen und zu einem Band zusammengefaßt. Das Band der rohen ungedipten Fäden wurde kontinuierlich einem Kalander zugeführt, der es beidseitig mit Kautschukmischung belegte. Das mit der Mischung abgedeckte Band wurde dann der Reifenaufbaumaschine zugeführt. Der Reifenrohling wurde anschließend in einer Presse unter den für Kautschukmischungen dieser Art üblichen Bedingungen vulkanisiert.

Es zeigte sich, daß aufgrund der geringen Schrumpfneigung der Polyesterverstärkungsfaden tief im Gummi eingebettet und durch seine Kapillarschlingen innig in demselben verankert war.

## Beispiel 2

Zur Herstellung des Fahrzeugreifens wurde ein Polyestergarn der Type ®TREVIRA HOCHFEST Type 702 dtex 1200 f 200 eingesetzt. Dieses Garn besteht zu 100 Gew.-% aus Polyethylenterephthalat, seine Reißfestigkeit ist 46 cN/tex bei einerReißdehnung von 13,8 %. Sein Heißluftschrumpf bei 160 ° C beträgt 0,8 %. Es weist im Mittel 60 Schlingen pro m auf und ist ungedreht. Vor seiner Texturierung wird das Garn mit einer kautschukverträglichen Präparation versehen.

Von 150 auf ein Gatter aufgesetzten Spulen dieses Garns wurden die Fäden abgezogen und zu einem Band zusammengefaßt. Das band der rohen ungedipten Fäden wurde kontinuierlich einem Kalander zugeführt, der es beidseitig mit Kautschukmischung belegte. Das mit der Mischung abgedeckte Band wurde dann der Reifenaufbaumaschine zugeführt. Der Reifenrohling wurde anschließend in einer Presse unter den für Kautschukmischungen dieser Art üblichen Bedingungen vulkanisiert.

Es zeigte sich, daß aufgrund der geringen Schrumpfneigung der Polyesterverstärkungsfaden tief im Gummi eingebettet und durch seine Kapillarschlingen innig in demselben verankert war.

## Ansprüche

1. Fahrzeugreifen enthaltend ein Verstärkungsgarn, dadurch gekennzeichnet, daß dieses zu mindestens 85 Gew.-% aus Polyethylenterephthalat besteht, seine Reißfestigkeit (Höchstzugkraft) nicht unter 40 cN/tex liegt, bei einer Reißdehnung von nicht über 15 %, sein Heißluftschrumpf bei 160 ° C 2 % nicht überschreitet, daß es 30 bis 100 Kapillarschlingen pro m aufweist und daß es ungedreht oder mit einem geringen Schutzdrall von bis zu 100 Drehungen pro m versehen ist.

2. Fahrzeugreifen gemäß Anspruch 1, dadurch gekennzeichnet, daß das Verstärkungsgarn eine Höchstzugkraft von 45 -50 cN/tex und einen Heißluftschrumpf bei 200 ° C von unter 2 % hat.

3. Fahrzeugreifen gemäß mindestens einem der Ansprüche 1 und 2, dadurch gekennzeichnet, daß das darin enthaltene Verstärkungsgarn ungedreht ist.

4. Fahrzeugreifen gemäß mindestens einem der Ansprüche 1 und 2, dadurch gekennzeichnet, daß das darin enthaltene Verstärkungsgarn einen Schutzdrall von 30 bis 100, vorzugsweise 50 bis 70 Drehungen pro m aufweist.

*Fig. 1*

*Fig. 2a*

*Fig. 2b*

Europäisches Patentamt

**EUROPÄISCHER RECHERCHENBERICHT**

Nummer der Anmeldung

EP 88 12 0413

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 223 301 (VISCOSUISSE)<br>* Seite 2, Zeile 49 - Seite 3, Zeile 44 * <br><br>--- | 1,3 | B 60 C 9/00 |
| A | EP-A-0 173 221 (HOECHSTAKTIENGESELLSCHAFT)<br>* Seite 6, Zeile 11 - Seite 8, Zeile 9 *<br><br>--- | 1-3 | |
| A | DE-A-3 226 346 (BRIDGESTONE TIRE CO.)<br>* Seite 6, Zeile 31 - Seite 10, Zeile 17 *<br><br>--- | 1 | |
| A | FR-A-2 459 128 (TEIJIN LTD)<br>--- | | |
| A | EP-A-0 201 114 (AKZO)<br>--- | | |
| A | EP-A-0 209 167 (VISCOSUISSE)<br>------- | | |

| | | | RECHERCHIERTE SACHGEBIETE (Int. Cl.4) |
|---|---|---|---|
| | | | B 60 C<br>D 01 F<br>D 02 G |

Der vorliegende Recherchenbericht wurde für alle Patentansprüche erstellt

| Recherchenort | Abschlußdatum der Recherche | Prüfer |
|---|---|---|
| DEN HAAG | 30-01-1989 | THEODORIDOU E. |